# EUROPEAN PATENT SPECIFICATION

(11) **EP 2 282 268 B1**
(45) Date of publication and mention of the grant of the patent: **21.11.2012**
(21) Application number: 10167469.5
(22) Date of filing: 28.06.2010
(51) Int. Cl.: G06F 13/38

(54) **Interfacing device and method, for example for systems-on-chip**
Schnittstellenvorrichtung und -verfahren, beispielsweise für System-on-Chip
Dispositif et procédé d'interfaçage, par exemple pour des systèmes sur puce

(30) Priority: 23.07.2009 IT TO20090559
(43) Date of publication of application: 09.02.2011
(73) Proprietor: STMicroelectronics Srl, 20864 Agrate Brianza (IT)
(72) Inventor: Giotta, Francesco, 95121 Catania (IT); Pisasale, Salvatore, 95123 Catania (IT); Falconeri, Giuseppe, 95030 Sant'Agata Li Battiati (Catania) (IT)
(74) Representative: Bosotti, Luciano

(56) References cited:
- US-B1- 6 578 097
- US-B2- 6 834 378

## Description

### Field of the invention

The present disclosure relates to interfacing techniques (IF) and has been developed with particular attention paid to their possible use in conjunction with buses of the so-called System-on-Chip (SoC) type.

### Description of the related art

In the design of a System-on-Chip (SoC), the digital part can be treated by resorting to a partition into various sub-systems. Each sub-system satisfies respective given constraints as regards the interface boundary (IF boundary) so that in the integration stage it is possible to obtain the so-called "timing closure" in a simple way. For example, an important constraint is that the interface signals can come directly from flip-flops, without assuming output delays in this layer.

Satisfying this constraint is in general possible, but, in particular in the case of the control paths, critical aspects can arise linked to the possible presence, between two parts of the system, of logic alone so as to reduce latency. This can create problems of integration for high-frequency applications and when the Intellectual Property (IP) modules wish to communicate with the bus using a protocol with request-grant validation. In this way, the IP modules prepare new data using the slow grant signal coming from the bus.

In this context, it is known to resort to techniques of a first-in first-out (FIFO) type using a fixed output position. In this case, the function of timing closure is simpler in so far as the grant signal coming from the bus is loaded only in this module.

The inventors have noted that this solution is not, however, free from disadvantages. In particular, the presence of a specific FIFO scheme renders loading of the data in the read stage more complex. Furthermore, the function of timing closure is satisfactory on the data path but the shift operation for shifting the data in the fixed location imposes a certain load on the grant signal, which is assumed to arrive with a delay from the bus.

Other solutions resort to FIFO schemes on two locations so as to overload the ACK signal only in the selection of one of the two data locations through updating of a read pointer.

The inventors have noted that these solutions prove, however, critical as regards management of the pointers, with the risk of injecting "bugs" in the case of overflow/underflow of the pointers themselves. The inventors have likewise noted that a modular approach does indeed enable saving of time, but cannot be implemented within an IP for guaranteeing the minimum latency possible in a scheme that is aimed exclusively at optimizing the timing.

Representative of the relevant art are the documents US-B-6 834 378 and US-B-6 956 424, and US-B-6 578 097, this last document being taken as a model for the preambles of claims 1 and 7.

### Object and summary of the invention

The inventors have noted that in the context of a digital system, whenever there is a handshake, i.e., a communication between a transmitter (initiator) and a receiver (target) it is important to have a good timing closure between the two parts of the system.

For example, there exists the need to free the design and hence the use of a generic IP that is to communicate with a bus system from the strict timing constraints of the bus system. This enables, in the stage of definition of the characteristics of the circuit, tackling of the problem of timing closure when IP schemes are integrated with a complex bus system, using both a pipeline solution and a FIFO scheme prepared and optimized from the performance standpoint.

The object of the present invention is to satisfy the needs outlined above.

According to the present invention, said object is achieved thanks to a device having the characteristics recalled specifically in the ensuing claims. The invention also relates to a corresponding method.

The claims form an integral part of the technical teaching provided herein in relation to the invention.

Various embodiments solve problems of integration at an ASIC level linked to the timing closure in the case of a generic initiator connected in an interconnection scheme of a System-on-Chip (SoC), this in particular in a context where an initiator such as a generic IP wishes to access the bus in an efficient way by sending thereon a well-defined burst transmitted on the bus without delay.

Various embodiments take into account the needs linked to the use of a grant-control signal obtained by an arbiter of a combinatorial type that is to decide to which initiator access is to be granted, at the same time enabling a timing closure with a clock frequency that is as high as possible.

In various embodiments, also the condition is managed in which the interconnection is not able to receive the traffic already present in a continuous flow by proposing a way of reducing this longer path linked to the grant of the interconnection, at the same time avoiding the use of an additional FIFO but resorting instead to a simple solution, which is easy to control and can be used in each integration step, i.e., at the level both of front-end step and back-end step and even in a situation where it is necessary to remedy a critical situation immediately.

In various embodiments, the ACK (acknowledgement) signal is employed as exchange information used by a target for communicating its availability to receive a data flow. The need to have a timing closure on the ASIC chip for this (in general "delayed") signal coming from an interconnect or from a target device (for example, the memory controllers of a peripheral) enables adoption of a simple approach for control of each sub-system in which the handshake signal is managed.

Various embodiments are applicable to new technologies in which the wire congestion due to the ever-increasing number of cells connected increases the length of the connections.

Various embodiments enable a good timing closure to be obtained between the two parts of the system. The process of transmission can be, for example, a FIFO. The grant signal from the receiver is used for increasing the read pointer of the FIFO. If the pointer is of a high value, with a FIFO that has numerous locations, the grant signal has in general a path that is quite long before the first register is reached. Various solutions described herein enable the transmitter to manage the grant signal, avoiding introduction of a lengthened digital path of this sort.

Various embodiments are usable in the framework of a communication protocol of a request-grant (RG) type. However, the solution described herein can be applied in any system in which there is a grant of a request furnished via a digital circuit and in which the timing of the grant signal is managed via a digital circuit.

The solution described herein enables numerous advantages to be achieved, amongst which:
- a simpler design scheme;
- a lower occupation of area in plug-in of a generic IP on an interconnect,
- the possibility of controlling the point of compromise between occupation of area and maximum frequency that can be achieved in a bus system by increasing if necessary the number of the finite-state machines (FSMs) in order to reduce loading thereof by a number of given multiplexers;
- the possibility of identifying the limits of frequency that can be achieved in a bus system in which the ACK signal is the lowest signal supplied;
- the possibility of implementing the structure in a conclusive step of the development of the chip likewise enabling development in any language without this requiring a considerable debugging activity.

### Brief description of the annexed drawings

The invention will now be described, purely by way of non-limiting example, with reference to the annexed drawings, wherein:
- Figure 1 is a block diagram of an embodiment;
- Figure 2 is a representation of a state machine that can be used in the diagram of Figure 1;
- Figure 3 represents a possible development of the state machine of Figure 2; and
- Figure 4 illustrates an embodiment that is able to use the state machine of Figure 3.

### Detailed description of examples of embodiment

In the ensuing description, various specific details are illustrated aimed at providing an in-depth understanding of the embodiments. The embodiments can be obtained without one or more of the specific details, or with other methods, components, materials, etc. In other cases, well-known structures, materials, or operations are not illustrated or described in detail so as not to render various aspects of the embodiments obscure.

Reference to "an embodiment" or "one embodiment" in the framework of this description is aimed at indicating that a particular configuration, structure or characteristic described in relation to the embodiment is included in at least one embodiment. Hence, phrases such as "in an embodiment" or "in one embodiment" that may be present in different points of this description do not necessarily refer to one and the same embodiment. Furthermore, particular conformations, structures, or characteristics can be combined in an adequate way in one or more embodiments.

The references used herein are only adopted for reasons of convenience and hence do not define the sphere of protection or the scope of the embodiments.

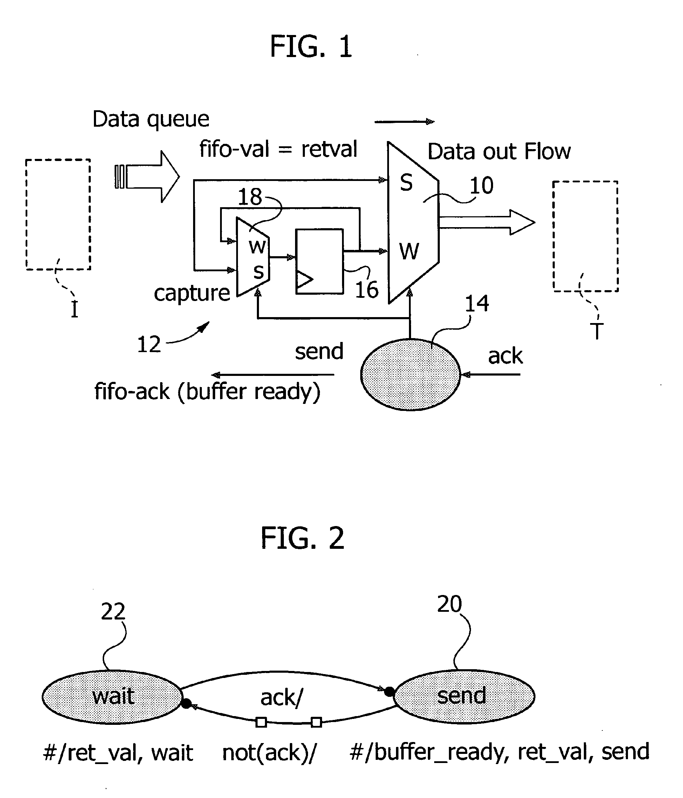

Figure 1 is a block diagram of a device that is to perform fundamentally a role of interface that receives at input a data flow, viewed in general as a data queue Data queue. The data queue Data queue, organized for instance according to a general FIFO (first-in first-out) scheme, can come, for example, from a transmitter device I having the function of "initiator". The device/interface of Figure 1 generates at output a data flow Data out Flow that is to be transmitted via bus to a "target" receiver T (for example an interconnect or a memory controller), within the framework, for example, of a System-on-Chip or SoC.

The output data flow Data out Flow presents at the output of a multiplexer 10, which receives:
- on its input S, the input signal Data queue, or
- on its other input W, a version of said signal "frozen" via a buffer circuit designated as a whole by 12, the characteristics of which will be illustrated more fully in what follows.

The working condition of the multiplexer 10 (i.e., the fact that the output signal Data out Flow corresponds either to the input S or to the input W) is determined by a finite-state machine (FSM).

In one embodiment, said finite-state machine is a Moore finite-state machine.

In the embodiment exemplified herein, the circuit 12 comprises an element with functions of memory 16, for example a flip-flop, the output of which is connected to the input W of the multiplexer 10.

The output of the element 16 is also brought to one of the inputs of a further multiplexer 18, which also has two inputs, designated, respectively, by w and s, that are to receive:
- the input signal Data queue having the function of "capture" (input s); and
- the output of the flip-flop 16 fed back to the input of the multiplexer 18 (input w).

The operating condition of the multiplexer 18 (i.e., which of the two inputs s, w is sent at output of the multiplexer 18, and hence at input to the element 16, cascaded to the multiplexer 18) is once again determined by the finite-state machine 14.

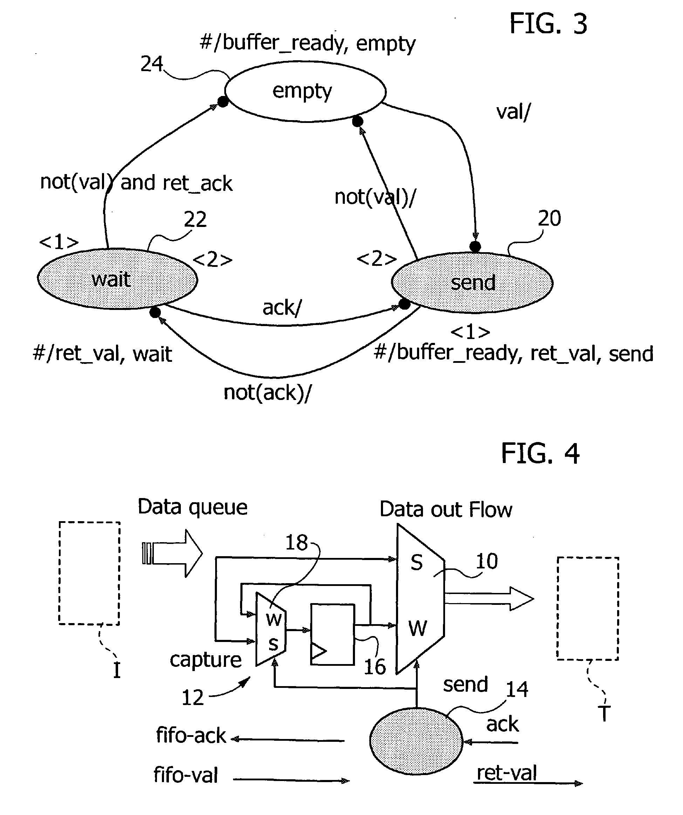

As regards the general criteria of operation, the diagrams of Figures 1 and 4 can be considered substantially equivalent to one another; as will be seen more clearly in what follows, the two embodiments differ from one another in particular as regards the organization of the finite-state machine 14.

Whatever the scheme adopted, the solution described herein has an intrinsically simple structure that can be obtained with different technologies (RTL or spare-cell connections) and is best used in the initial stage of a CMOS technological flow.

The embodiments described herein reduce to a minimum the use of the signal ACK arriving from the target T so as to not introduce delays linked to the presence of further buffer cells instantiated in order to respect fan-out of the cell in relation to said signal.

In the embodiments described herein, the finite-state machine 14 is a Moore finite-state machine that uses two or three states at the most. The choice of a Moore finite-state machine is linked to the fact that, in the embodiments considered herein, the finite-state machine uses only actions at input (i.e., the output depends only upon the state of the machine).

The ACK signal is used only by the finite-state machine 14 and not by the FIFO at input. In the embodiment of Figure 1, the two states of the machine 14 are used for choosing two different data paths. The first is the direct normal flow that passes through the input S of the multiplexer 10. The second is the data path that passes (towards the input W of the multiplexer 10) through the function of memory or "freeze location" expressed by the buffer circuit or network 12.

The buffer circuit or network 12 is used for storing a copy of the data, which can be used in the case where the target T is busy, thus preventing a latency cycle in sending of the data whenever the target T is busy, enabling updating of the output data of the FIFO. In particular, use of the ACK signal for updating the memory location is avoided.

The state machine 14 supplies a signal for selecting the input of the multiplexer 10 (and also of the multiplexer 18 so as to enable recycling of the signal captured through the element 16) thanks to a signal generated without in itself having a direct relationship with the ACK signal coming from the target T.

The diagram of Figure 1 shows the emission, by the finite-state machine 14, of a signal referred to as FIFO-ACK, which signals the availability of the buffer (buffer ready) so as to enable updating of the FIFO data from the queue.

In the specific case represented in Figure 2, the machine 14 has two states designated by "send" and "wait", and the passage from one state to the other is linked to the reception of the ACK signal (ack/) from the target T.

In particular, the reception of the signal ack/(indicating the fact that the target T is available) sends the machine from the wait state 22 to the send state 20. In this state, the state machine 14 controls the multiplexer 10 in such a way as to enable direct passage of the signal at input (Data queue) to the output of the multiplexer 10 (Data out Flow). At the same time, the multiplexer 18 via the input s captures the next input datum.

The failure to receive the ACK signal (expressable as not(ack)/) sends, instead, the machine into the wait state 22, causing the data to be "frozen" in the network or circuit 12, since the target T is not at the moment available.

The solution represented in Figures 1 and 2 can be adopted in the case where there is a continuous flow coming from the FIFO at input. In said conditions, the control signal for validating the data (fifo val) is always asserted, but can be connected directly to the validation signal of the FIFO, which leads to a loss of some advantages linked to interruption of said path.

The embodiments of Figures 3 and 4 refer to a finite-state machine 14 comprising, in addition to the states 20 and 22 already described previously, a further state of inactivity ("empty" state) 24 that is to be asserted when no datum is present in the of "freeze location" buffer circuit 12 while, at the same time, no data are available in the FIFO.

This solution can be adopted when the output path of the FIFO in terms of validation-control signal and data-path signal may present problems in terms of closing time, in particular when the number of locations is high. The use of a more complex three-state machine 14 enables use of a reclocking signal pre-sampled (in the previous cycle) by the validation signal "val" (ret val) that is to be asserted only when the "empty" state (i.e., the state 24) is active.

The diagram of Figure 3 highlights how the passage from the wait state 22 to the empty state 24 is obtained as a result of the simultaneous condition not(val) (i.e., absence of validation signal) in combination (logic product) with the presence of the signal ret ack (and of the signal ack/).

It will be appreciated that the signal ret_ack is "high" when the freeze location cell 12 is available for receiving a new datum and this is always true when the ACK signal is asserted.

It will likewise be appreciated that the transition between the state 22 and the state 24 occurs in one direction only, i.e., from the state 22 to the state 24, and not vice versa.

The transition from the state 24 to the state 20 occurs upon reception of the validation signal "val/", whereas the transition between the state 20 and the state 24 occurs in the absence of the validation signal (i.e., in the condition that can be expressed as not(val)/.

## Claims

1. A device for transferring data from an input queue (Data queue) to an output flow (Data out Flow) towards a target (T), the device including:
- a buffer network (12) to freeze input data when said target (T) is not available to receive data,
- a multiplexer (10) for switching between a first operating condition, to direct towards said target (T) data from said input queue (Data queue), and a second operating condition, to direct towards said target (T) data from said buffer network (12), and **characterised by**:
- a finite state machine (14) to selectively switch said multiplexer (10) between said first and second operating conditions as a function of an acknowledgement signal (ACK) received from said target (T) and indicative of the availability of the target (T) to receive data.

2. The device of claim 1, wherein said finite state machine (14) is a Moore-type finite state machine.

3. The device of claim 1 or claim 2, wherein said finite state machine (14) includes:
- a send state (20) to drive said multiplexer (10) in said first operating condition, and
- a wait state (22) to drive said multiplexer (10) in said second operating condition.

4. The device of claim 3, wherein said finite state machine includes a further idle state (24) towards which said finite state machine (14) evolves when said target (T) is available to receive input data in the absence of data in said input queue (Data queue) to transmit to said target (T).

5. The device of any of the previous claims, wherein said buffer network (12) includes:
- an element (16) for storing data captured from said input queue (Data queue), and
- a further multiplexer (18) for switching under the control of said finite state machine (14) between a capture condition of new data from said input queue (Data queue) and a recycling condition of data stored in said storing element (16).

6. The device of claim 5, wherein said finite state machine (14) is configured to act on said further multiplexer (18) to drive said further multiplexer is said capture condition and said recycling condition when said multiplexer (10) transmits data from said queue towards said target (T) and when said acknowledgement signal indicates that said target (T) is not available to receive input data, respectively.

7. A method of transferring data from an input queue (Data queue) to an output flow (Data out Flow) towards a target (T), including:
- providing a buffer network (12) to freeze input data when said target (T) is not available to receive data,
- in a first operating condition, directing towards said target (T) data from said input queue (Data queue),
- in a second operating condition, directing towards said target (T) data from said buffer network (12), and **characterised by**:
- selectively switching (10) between said first and said second operating conditions as a function of the state of a finite state machine (14) which changes states as a function of an acknowledgement signal (ACK) received from said target (T) and indicative of the availability of the target (T) to receive data.

## Patentansprüche

1. Vorrichtung zum Transferieren von Daten aus einer Eingangswarteschlange (Datenwarteschlange) in einen Ausgangsdatenabfluss (Datenausgangsabfluss) in Richtung auf ein Ziel (T), wobei die Vorrichtung umfasst:
- ein Puffer-Netzwerk (12) zum Einfrieren von Eingangsdaten, wenn das Ziel (T) nicht zum Entgegennehmen von Daten verfügbar ist,
- einen Multiplexer (10) zum Umschalten zwischen einem ersten Betriebszustand zum Lenken von Daten aus der Eingangs-Warteschlange (Daten-Warteschlange) in Richtung auf das Ziel (T), und einem zweiten Betriebszustand zum Lenken von Daten aus dem Puffernetzwerk (12) in Richtung auf das Ziel (T), und
**gekennzeichnet durch**:
- einen endlichen Zustandsautomaten (14) zum selektiven Umschalten des Multiplexers (10) zwischen dem ersten Betriebszustand und dem zweiten Betriebszustand als einer Funktion eines von dem Ziel (T) entgegengenommenen und die Verfügbarkeit des Zieles (T) zum Entgegennehmen von Daten anzeigenden Rückmeldungssignals (ACK).

2. Vorrichtung nach Anspruch 1, wobei der endliche Zustandsautomat (14) ein endlicher Automat vom Moore-Typ ist.

3. Vorrichtung nach Anspruch 1 oder 2, wobei der endliche Zustandsautomat (14) beinhaltet:
- einen Sendezustand (20) zum Ansteuern des Multiplexers (10) in dem ersten Betriebszustand, und
- einen Wartezustand (22) zum Ansteuern des Multiplexers (10) in dem zweiten Betriebszustand.

4. Vorrichtung nach Anspruch 3, wobei der endliche Zustandsautomat einen weiteren Untätigkeitszustand (24) beinhaltet, auf den hin sich der endliche Zustandsautomat (14) entwickelt, wenn das Ziel (T) in Abwesenheit von zu dem Ziel (T) zu übertragenden Daten in der Eingangswarteschlange (Daten-Warteschlange) zum Entgegennehmen von Eingangsdaten verfügbar ist.

5. Vorrichtung nach irgendeinem der vorstehenden Ansprüche, wobei das Puffernetzwerk (12) beinhaltet:
- ein Element (16) zum Speichern von aus der Eingangswarteschlange (Daten-Warteschlange) erfassten Daten, und
- einen weiteren Multiplexer (18) zum Umschalten unter der Steuerung des endlichen Zustandsautomaten (14) zwischen einem Erfassungszustand von neuen Daten aus der Eingangswarteschlange (Daten-Warteschlange) und einem Recycling-Zustand von in dem Speicherelement (16) gespeicherten Daten.

6. Vorrichtung nach Anspruch 5, wobei der endliche Zustandsautomat (14) konfiguriert ist, auf den weiteren Multiplexer (18) einzuwirken, um den weiteren Multiplexer in den Erfassungszustand und in den Recycling-Zustand zu steuern, wenn der Multiplexer (10) Daten aus der Warteschlange in Richtung auf das Ziel (T) überträgt beziehungsweise wenn das Rückmeldungssignal anzeigt, dass das Ziel (T) nicht zur Entgegennahme von Eingangsdaten zur Verfügung steht.

7. Verfahren zum Übertragen von Daten aus einer Eingangswarteschlange (Daten-Warteschlange) in einen Ausgangsabfluss (Datenausgangsabfluss) in Richtung auf ein Ziel (T), aufweisend:
- Vorsehen eines Puffernetzwerkes (12) zum Einfrieren von Eingangsdaten, wenn das Ziel (T) nicht zur Entgegennahme von Daten verfügbar ist,
- in einem ersten Betriebszustand, Lenken von Daten aus der Eingangswarteschlange (Daten-Warteschlange) auf das Ziel (T) zu,
- in einem zweiten Betriebszustand, Lenken von Daten aus dem Puffernetzwerk (12) in Richtung auf das Ziel (T) zu, und
**gekennzeichnet durch**:
- selektives Umschalten (10) zwischen dem ersten Betriebszustand und dem zweiten Betriebszustand als einer Funktion des Zustandes eines endlichen Zustandsautomaten (14), welcher Zustände als eine Funktion eines von dem Ziel (T) entgegengenommenen und die Verfügbarkeit des Zieles (T) zum Entgegennehmen von Daten anzeigenden Rückmeldungssignals (ACK) wechselt.

## Revendications

1. Dispositif pour transférer des données à partir d'une file d'entrée (file de données) à un flux de sortie (flux de sortie de données) vers une cible (T), le dispositif comprenant :
- un réseau tampon (12) pour geler des données d'entrée lorsque ladite cible (T) n'est pas disponible pour recevoir des données,
- un multiplexeur (10) pour commuter entre un premier état de fonctionnement, pour diriger vers ladite cible (T) des données à partir de ladite file d'entrée (file de données), et un second état de fonctionnement, pour diriger vers ladite cible (T) des données à partir dudit réseau tampon (12), et **caractérisé par** :
- une machine à états en nombre fini (14) pour commuter sélectivement ledit multiplexeur (10) entre lesdits premier et second états de fonctionnement en fonction d'un signal d'accusé de réception (ACK) reçu de ladite cible (T) et indicateur de la disponibilité de la cible (T) pour recevoir des données.

2. Dispositif selon la revendication 1, dans lequel ladite machine à états en nombre fini (14) est une machine à états en nombre fini de type Moore.

3. Dispositif selon la revendication 1 ou la revendication 2, dans lequel ladite machine à états en nombre fini (14) comprend :
- un état d'envoi (20) pour commander ledit multiplexeur (10) dans ledit premier état de fonctionnement, et
- un état d'attente (22) pour commander ledit multiplexeur (10) dans ledit second état de fonctionnement.

4. Dispositif selon la revendication 3, dans lequel ladite machine à états en nombre fini comprend un autre état de repos (24) vers lequel ladite machine à états en nombre fini (14) évolue lorsque ladite cible (T) est disponible pour recevoir des données d'entrée en l'absence de données dans ladite file d'entrée (file de données) pour transmettre à ladite cible (T).

5. Dispositif selon l'une quelconque des revendications précédentes, dans lequel ledit réseau tampon (12) comprend :
un élément (16) pour stocker des données saisies à partir de ladite file d'entrée (file de données), et
- un autre multiplexeur (18) pour commuter sous la commande de ladite machine à états en nombre fini (14) entre un état de saisie de nouvelles données à partir de ladite file d'entrée (file de données) et un état de recyclage des données stockées dans ledit élément de stockage (16).

6. Dispositif selon la revendication 5, dans lequel ladite machine à états en nombre fini (14) est configurée pour agir sur ledit autre multiplexeur (18) pour commander ledit autre multiplexeur dans ledit état de capture et ledit état de recyclage lorsque ledit multiplexeur (10) transmet des données à partir de ladite file vers ladite cible (T) et lorsque ledit signal d'accusé de réception indique que ladite cible (T) n'est pas disponible pour recevoir des données d'entrée, respectivement.

7. Procédé de transfert de données à partir d'une file d'entrée (file de données) à un flux de sortie (flux de sortie de données) vers une cible (T), comprenant :
- la fourniture d'un réseau tampon (12) pour geler des données d'entrée lorsque ladite cible (T) n'est pas disponible pour recevoir des données,
- dans un premier état de fonctionnement, le fait de diriger vers ladite cible (T) des données à partir de la file d'entrée (file de données),
- dans un second état de fonctionnement, le fait de diriger vers ladite cible (T) des données à partir dudit réseau tampon (12), et **caractérisé par**
- la commutation sélective (10) entre lesdits premier et second états de fonctionnement en fonction de l'état d'une machine à états en nombre fini (14) qui change d'état en fonction d'un signal d'accusé de réception (ACK) reçu de ladite cible (T) et indicateur de la disponibilité de la cible (T) pour recevoir des données.
